# EUROPEAN PATENT APPLICATION

(11) **EP 2 511 831 A1**
(43) Date of publication of application: **17.10.2012**
(21) Application number: 11162483.9
(22) Date of filing: 14.04.2011
(51) Int. Cl.: G06F 17/27

(54) **Text processor and method of text processing**

(71) Applicant: Lawley, James, Ludlow Sropshire SY8 2NG (US)
(72) Inventor: Lawley, James, Ludlow Sropshire SY8 2NG (US)
(74) Representative: Walaski, Jan Filip

(57) **Abstract**

A text processor and a computer implemented method of text processing comprises obtaining a plurality of word groups each comprising a sequence of words from a text, determining a frequency of occurrence of each of the word groups within a text corpus, by interrogating a database including the frequency information, and indicating word groups that have a frequency of occurrence that is below a threshold value. The application is directed specifically to the correction of grammatical and lexical errors.

## Description

The present invention relates to a text processor and a method of text processing, particularly to a grammar checker and a method of detecting grammatical and lexical errors during word processing.

Spelling and grammar checking is widely used in word processing programs to identify typing mistakes and grammatical errors. For example if a word is misspelt, a spell checker may detect that a sequence of letters does not match with a word defined in its database. Grammatical mistakes may be identified if a word or phrase in a text document is inconsistent with a predefined rule of grammar. Once an error has been identified, the spelling and grammar checker may also either automatically correct the mistake or suggest alternative words or phrases.

Grammar checking has applications in both native speaker writing and for use in educational resources for students of English as a Foreign Language. The types of mistake commonly made by language students typically take the form of incorrect sentence construction. For example, in the phrase "my mother is teacher", the indefinite article 'a' is omitted.

Native speaker mistakes may relate to omitted words, misused homophones (e.g. there/their) or words which are mistyped in such a way as to constitute another word (e.g. "They went back fro it"), where the misspelt word "fro" instead of "for" matches a word in the dictionary of the spell checker and so cannot be identified by conventional means.

According to an aspect of the invention, there is provided a method of text processing, the method comprising obtaining a plurality of word groups each comprising a sequence of words from a text, determining a frequency of occurrence of each of the word groups within a text corpus and indicating word groups that have a frequency of occurrence that is below a threshold value.

Determining the frequency of occurrence of the word groups within the text corpus may comprise searching a database containing information on the frequency of occurrence of each of the word groups within the corpus.

The method may comprise splitting the text into consecutive word groups to form the plurality of word groups and searching the database for the frequency of occurrence information for each of the plurality of word groups.

In one embodiment, creation of the data in the database may comprise receiving information defining a frequency of occurrence of each word within a plurality of word groups and calculating an expected frequency of occurrence of the word group based on the frequency of occurrence of each word within the word group. The expected frequency of occurrence may be calculated on the basis that all word combinations are equally likely. The method may then further comprise, for each word group, calculating a ratio of the actual frequency of the word group within the corpus to the expected frequency of each word group.

Calculating a ratio of the actual frequency to the expected frequency can compensate for a low actual frequency of occurrence of word groups that have a low expected frequency of occurrence, but which may not therefore be erroneously used.

The method may comprise applying a plurality of threshold bands that indicate different levels of frequency of occurrence.

Indicating word groups that have a frequency of occurrence that is below a threshold value may comprise displaying the word groups highlighted on a display. For example, the word groups may be displayed in a different colour or using other visual effects. Word groups that have a frequency of occurrence that falls within different threshold bands may be differentiated from one another, for example by being displayed in different colours.

The word groups may comprise word pairs.

According to another aspect of the invention, there is provided a computer program which, when executed by a processor, is arranged to perform a method as defined above.

According to another aspect of the invention, there is provided a text processing apparatus, the apparatus comprising a parser for obtaining a plurality of word groups each comprising a sequence of words from a text, a look-up module for determining a frequency of occurrence of each of the word groups within a text corpus and a display for indicating word groups that have a frequency of occurrence that is below a threshold value.

The apparatus may comprise a database that stores word groups in association with the frequency of occurrence of each of the word groups in the text corpus, wherein the look-up module is arranged to look-up the database to determine the frequency of occurrence.

The frequency of occurrence for each of the word groups may comprise one selected from the group of absolute frequency of occurrence, relative frequency of occurrence relative to the expected frequency of occurrence of the word group and a value obtained by comparing the absolute or relative frequency of occurrence with a threshold level.

According to a further aspect of the invention, there is provided a method of generating a database, comprising calculating permutations of a set of commonly used words in a given language, for each permutation, determining the frequency of occurrence in a text corpus and storing the permutation in association with the determined frequency.

The method may further comprise, for each permutation, calculating the expected frequency of occurrence based on the frequencies of occurrence of the individual words in the text corpus.

The method may further comprise calculating a ratio of the actual frequency of occurrence within the text corpus to the expected frequency of occurrence.

According to a yet further aspect, there is provided a method of detecting a potential error in a text document, the method comprising determining whether a word combination within the text document has a frequency of occurrence in the language of the document that is lower than a threshold frequency and highlighting the word combination if the frequency of occurrence is lower than the threshold frequency.

The method may further comprise matching word combinations of a text composition with a relative frequency of occurrence in the language of the document, by splitting the text composition into word combinations of consecutive word pairs and searching a database containing information on the frequency of occurrence of the word combinations in the language of the document.

Embodiments of the present invention will now be described, by way of example, with reference to the accompanying drawings, in which:
Figure 1 is a block diagram of an apparatus according to an embodiment of the present invention;
Figure 2 illustrates an example database structure for the database of Figure 1;
Figure 3 is a flow diagram illustrating creation of the database of Figure 1;
Figure 4A illustrates a method of calculating frequency information according to one embodiment;
Figure 4B illustrates a method of calculating frequency information according to another embodiment;
Figure 5 illustrates the structure of the grammar checker according to an embodiment of the present invention; and
Figure 6 is a flow diagram of the operation of the grammar checker of Figure 5.

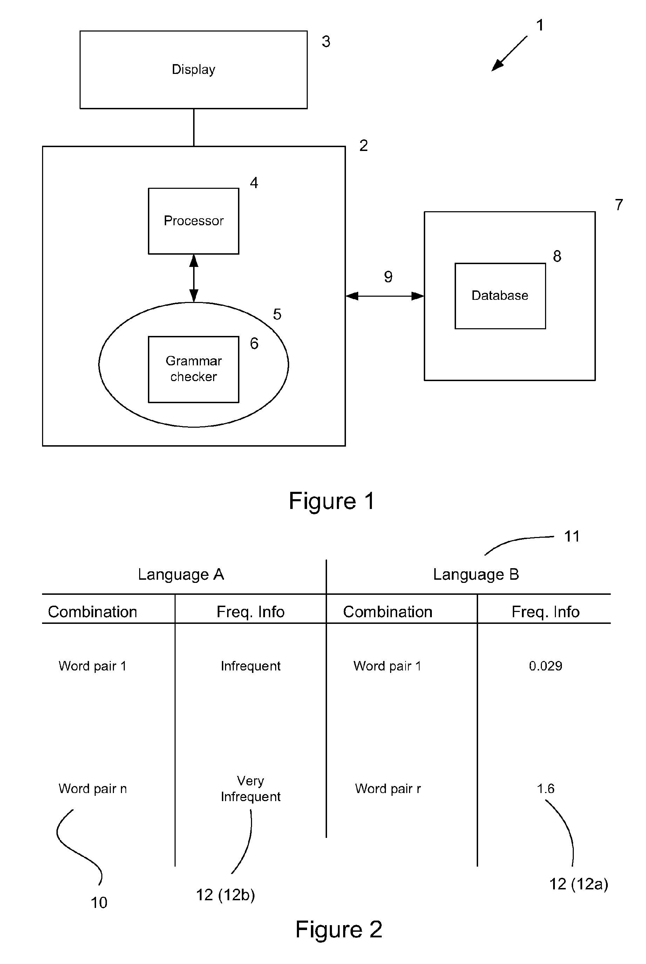

Figure 1 illustrates an apparatus 1 for identifying grammatical or lexical errors in text documents according to one embodiment of the present invention. The apparatus 1 comprises a host computer 2 and a display 3. The host computer includes a processor 4 that is capable of running a word processing program or office software package 5 that includes a grammar checker 6. The many possible architectures of a host computer for running word processing and other programs are well known to the skilled person and will not be described in detail further. The apparatus 1 further comprises a server 7 that includes a database 8. The host computer 2 communicates with the server 7 via a network 9 that includes, but is not limited to, a local area network or the internet. As an alternative to a remote client server architecture, the database may be implemented within the host computer, and may be periodically updated, for example in the same way that a virus checking database is stored and updated.

The word processing program 5 may inherently include the functionality of the grammar checker 6, or the grammar checker 6 may be provided as a plug-in or filter for a commercially available program. As an alternative, the grammar checker may be provided as a standalone grammar checking application, which may be run on an operating system independently of the word processing application. Documents or web links may be imported into the grammar checker 6 from external applications such as a word processor. The grammar checker 6 may optionally be embodied as a web interface, which the user can access online and to which the user may upload documents for checking.

It will be understood by the skilled person that the invention is not limited by the way in which the grammar checker 6 and the database 8 are implemented and numerous different embodiments would be apparent to the skilled person.

Figure 2 illustrates an example database structure.

Referring to Figure 2, the database 8 comprises a large number of word pairs 10 in one or more languages 11. For example, the database 8 comprises one hundred million combinations (permutations) of the ten thousand most frequent words in English, together with frequency information 12 that comprises information specifying the frequency with which each combination appears in a substantial corpus of English language texts. A text corpus refers to a large collection of samples of the English language.

As an example, the Cambridge International Corpus (CIC) is a very large searchable collection of English texts, stored in a computerised database. The information in the CIC comes from newspapers, novels, non-fiction books on a wide range of topics, websites, magazines, junk mail, TV and radio programmes, recordings of people's everyday conversations and many other sources. As will be described in more detail below, the frequency information 12 may be determined in a variety of ways, and may be, inter alia, a score 12a that represents the actual frequency of occurrence of each word pair or a relative frequency of occurrence, or it may be information 12b related to the expected or relative frequency, for example, it may indicate that the word pair is unusual or very unusual/infrequent or very infrequent. In other words, the raw frequency data is further processed against some threshold to provide a measure of relative frequency, which may itself be a number, for example, 3 on a scale of 1 to 10, or a term such as 'infrequent'. Embodiments of the invention are not limited by the specific way in which the frequency information is determined or stored.

The specific form of database shown in Figure 2 is not limiting, and the information may be stored in various different ways. In particular, Figure 2 is not intended to provide any limitation on the database structure. A single entry per word combination may provide rapid look-up, but at the expense of memory requirements and loading times. However, the skilled person will be familiar with different techniques for efficient data storage and look-up.

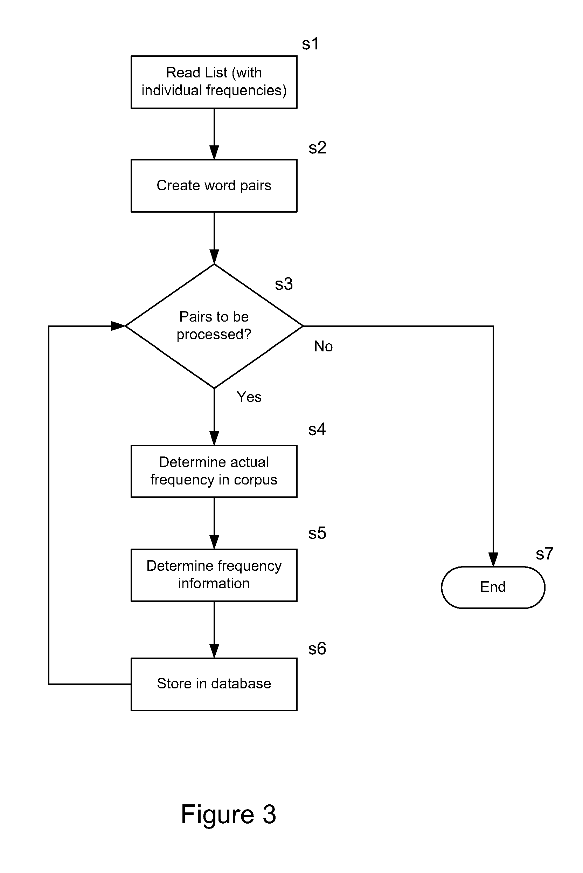

Figure 3 describes the operation of one embodiment of a program for creating the database 8.

Referring to Figure 3, a list of the most commonly used words in a language, for example, 10,000 words, is read by the program from an external source (step s1). Such lists exist in the public domain or may be obtained by, for example, searching the text corpus to find out how many different words there are, how often each occurs and then ranking them in order of frequency. The list may be accompanied by the associated frequencies of occurrence of the individual words in the list, which can also be derived from the corpus, as is set out in more detail below. The list is processed into all mathematically possible permutations of word pairs (step s2). For each word pair (step s3), a search of the corpus is carried out and the actual frequency of occurrence in the corpus is determined (step s4). Frequency information 12 is determined from the determined actual frequency (step s5) and the word pair and its associated frequency information is then stored in the database (step s6). The process is repeated (step s3) until a frequency has been determined for all the word pairs, when the program ends (step s7).

It would be understood by the skilled person that the program defined above may be entirely separate from the grammar checker program 6 and need only be run when the database is to be created or updated, which may be done periodically to account for changes to the text corpus.

Step s5 illustrated in Figure 3 refers to the determination of frequency information. As stated above, the frequency information may be an actual or relative frequency, a score computed from these values or a value that takes into account threshold information. The frequency information 12 may therefore be computed in various different ways.

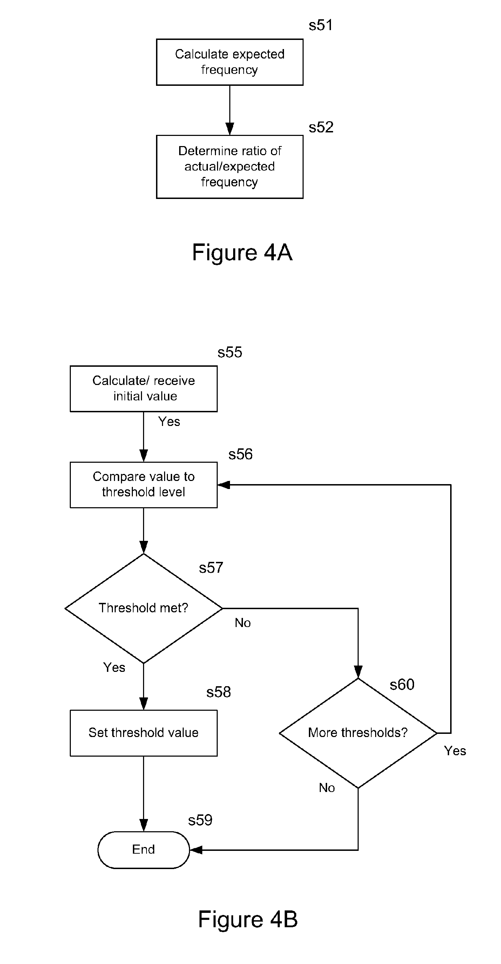

Figure 4A illustrates an example of one way in which the frequency information may be calculated in step s5.

Referring to Figure 4A, and as previously stated, the list of common words may be accompanied by the associated frequencies of occurrence of the individual words in the list. Where this information is provided, the expected frequency of each word pair is first calculated from the individual frequencies (step s51). The ratio of the actual frequency to the expected frequency is then determined (step s52).

The expected frequency may be the frequency of each word pair that would be expected to result if the words were chosen independently at random. For example, in a test run on a corpus of 140 million words of correct English, the word 'teacher' occurred about 11,000 times and the word 'was' about 1,400,000 times. In other words, 'teacher' occurs about once every 13,000 words and 'was' about once every 100 words. Given those frequencies, if words just occurred at random, with no regard for sense or grammar, the word pairs 'was teacher' and 'teacher was' would each be expected to occur about 110 times.

However, in a test on the same corpus, the word pair 'was teacher' was found to only occur 3 times while 'teacher was' occurred about 200 times.

So in the case of the word pair 'was teacher', the number of observed occurrences is 3 and the number of expected occurrences is 110. The ratio of the observed to the expected occurrences is 3/110 = 0.027 (approximately), which is an indication of how rare the pair 'was teacher' is. For the word pair 'teacher was', the ratio is 200/110 = 1.82 (approximately) - an indication that 'teacher was' is relatively frequent.

It will be understood that for word pairs where the expected frequency is low, the above ratio is likely to give a more accurate determination of whether the word pair is erroneous or potentially erroneous, compared with using the actual frequency of occurrence. For example, assuming a given word pair has an expected frequency of occurrence of 3, and an observed frequency of occurrence of 3, then the ratio of observed/expected is 1, which indicates that the given word pair is significantly more likely to be correct than a word pair such as 'was teacher', even though both have the same observed frequency of occurrence.

In an alternative embodiment illustrated in figure 4B, step s5 is implemented by performing a threshold calculation based on the actual frequency information or the ratio of observed/expected. Frequency information is initially calculated or received (step s55). This may be actual frequency information received from step s4 in Figure 3 or may be the ratio information calculated in step s52 shown in Figure 4A. The initially calculated information is compared to one or more threshold levels (step s56). If the initially calculated value meets a given threshold level or falls within a threshold band (step s57), a value associated with the threshold level is assigned to the word pair (step s58) and the program sequence ends (step s59). For example, the value may be 'infrequent'.

If the initially calculated value does not meet the given threshold level (step s57), the program checks whether there are further threshold levels to be applied (step s60). If not, the program ends. If there are then the sequence is repeated from step s56.

For example, a threshold level of 0.01 is associated with the value 'very unusual', and a threshold level of 0.1 is associated with the value 'unusual'. Therefore, a word pair with a frequency ratio of less than or equal to 0.01 is set as being 'very unusual', whereas a word pair with a frequency ratio of more than 0.01 but less than or equal to 0.1 is set as 'unusual' and this information is stored in the database.

The values associated with the threshold levels may therefore be stored within the database itself against each word pair. In this case, the grammar checker need only read the value associated with each word pair and decide on the appropriate action based on preset or user settings or preferences. Alternatively, the database may include only raw values of frequency of occurrence, so that the process of applying the threshold levels needs to be carried out by the grammar checker 6, as will be explained in more detail below. In this case, a greater level of tuning can be applied to the threshold levels, since the grammar checker 6 has a greater degree of freedom in determining whether any given word pair is in fact erroneous, or that it should be notified to a user as being potentially erroneous.

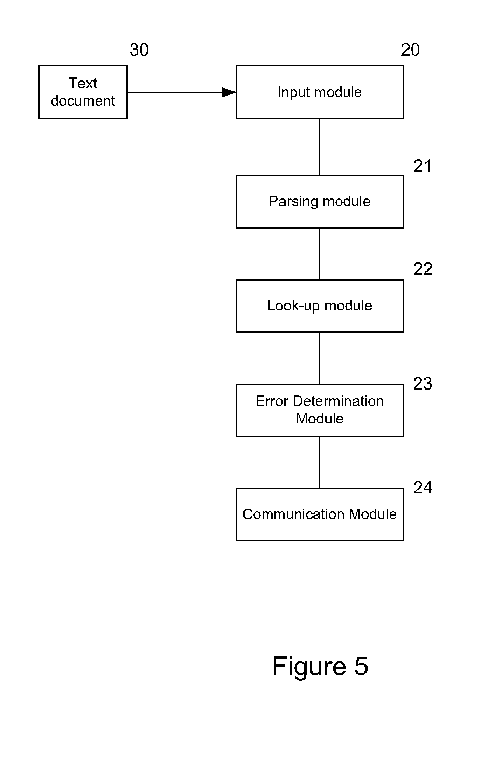

Figure 5 is an outline of the software architecture of the grammar checker 6 according to one embodiment. The grammar checker 6 comprises an input module 20, which takes a text document 30 as an input and collects the text from it. In an alternative embodiment, the input module may include a scanning module for performing an optical character recognition process on an image file to provide a document from which text can be extracted.

A parsing module 21 processes the text into word pairs. For example, from the sentence "My mother is teacher", the parsing module 21 produces "My mother", "mother is" and "is teacher". A look-up module 22 is arranged to send a look-up request for each word pair to the database 8 and to receive the resulting frequency information 12, which is passed to the error determination module 23 to determine whether the word pair is potentially erroneous, in other words that it should be drawn to the attention of the user. A communication module 24 communicates with word processing software 5 to implement the decision of the error determination module.

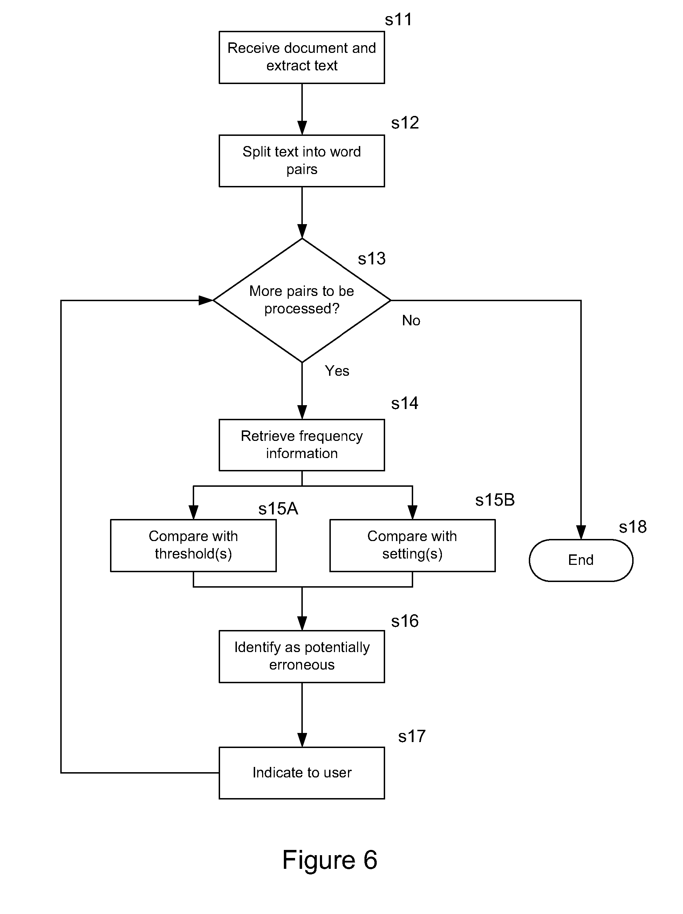

Figure 6 is a flow diagram illustrating the steps which are performed in one embodiment by the grammar checker 6 of Figure 5.

Referring to Figure 6, a document 30 is received by the input module 20 which extracts the text from it (step s11). The parsing module 21 splits the text into consecutive word pairs (step s12). The parsing of text to determine word pairs, for example, extracting consecutive words which are not separated by punctuation, is well within the capabilities of the skilled person and will not therefore be described in detail. For each word pair (step s13), the look-up module 22 sends a request to the database 8 to find the frequency information 12 associated with the word pair (step s14).

Depending on the nature of the frequency information 12, this may be compared with a threshold value (step s15A), which is, for example, set to determine a cut-off point at which a word group is considered so infrequent that it is likely to be a grammatical or lexical error. The way in which threshold values are calculated may be similar to that shown in Figure 4B, this process being carried out by the grammar checker 6 rather than by the program that creates the database 8.

If the frequency information value is lower than the threshold level then the word group is identified as potentially erroneous (step s16) and the communication module 24 communicates with the word processor software 5 to indicate the potential error to the user (step s17) in an appropriate way. For example, the word pair is highlighted in a different colour or by another visual or other identifier to indicate the error. Where multiple thresholds are set, the errors may be highlighted in various colours according to the level of infrequency, for example amber for "infrequent" and red for "very infrequent".

Where the frequency information 12 has already been processed against threshold levels, the frequency information 12 may be compared against preset or user settings to identify potentially erroneous word pairs (step s15B). For example, the user may set filters that show only 'Very infrequent' word pairs, or that show both 'Infrequent' and 'Very infrequent' word pairs. Therefore, when the database information indicates that the word pair is 'Very infrequent', the word pair is identified as potentially erroneous (step s16) and indicated to the user (step s17).

The program sequence ends when no more word pairs remain to be processed (step s13, s18).

As mentioned above, where the database stores raw frequency information, the grammar checker has greater flexibility in the setting of threshold levels. This can be used for training the grammar checker. For example, an initial threshold level is set and the grammar checker program is run against a piece of known text. The output of the grammar checker is compared to the expected result, and the initial thresholds can be adjusted to achieve the expected effect. For example, where a word pair is highlighted as very infrequent, but this is not considered correct by an administrator using the program, right-clicking on the word pair can allow the setting of a different level, for example, 'infrequent'. This technique can be used to provide additional assistance during grammar checking. For example, in certain known situations, additional comments can be provided. In the example 'was teacher' given above, in the training mode, right clicking allows an administrator to enter a comment such as 'May be appropriate, for example: "One issue was teacher power"'. Such comments can then be uploaded for storage in the database against the word pair 'was teacher'.

In an alternative embodiment, the grammar checker 6 automatically corrects errors or suggests corrections in the document in real time as the user is typing, for example by suggesting similar words which have a much higher frequency of occurrence in the word pair. For example, the word pair 'their was' which is very infrequent, can be linked to the word pair 'there was', which is very frequent.

While embodiments of the invention have primarily been described with reference to word pairs, the principle is applicable to word groups comprising more than just two words. The term 'word group' therefore covers a sequence of two or more words.

In summary, in one embodiment, a database contains information on the frequency of occurrence in a large corpus of native-speaker writing of all the mathematically possible two-word combinations of a set of the most frequent words used in that language, for example 10,000 words. A program splits a text into two-word combinations and then searches the database to match each combination with the one in the database. On making the match, it highlights that combination on screen if it meets a particular threshold, for example a threshold that defines it as an infrequent combination.

Whilst certain embodiments of the present invention have been described above, the skilled person will understand that many variations and modifications are possible without departing from the scope of the invention as defined by the accompanying claims.

## Claims

1. A method of text processing, the method comprising:
obtaining a plurality of word groups each comprising a sequence of words from a text;
determining a frequency of occurrence of each of the word groups within a text corpus; and
indicating word groups that have a frequency of occurrence that is below a threshold value.

2. The method of claim 1, wherein determining the frequency of occurrence of the word groups within the text corpus comprises searching a database containing information on the frequency of occurrence of each of the word groups within the corpus.

3. The method of claim 2, comprising splitting the text into consecutive word groups to form the plurality of word groups and searching the database for the frequency of occurrence information for each of the plurality of word groups.

4. The method of any one of the preceding claims, comprising:
receiving information defining a frequency of occurrence of each word within a plurality of word groups; and
calculating an expected frequency of occurrence of each of the word groups based on the frequency of occurrence of each word within the word group.

5. The method of claim 4, further comprising, for each word group, calculating a ratio of the actual frequency of the word group within the corpus to the expected frequency of each word group.

6. The method of any one of the preceding claims, comprising applying a plurality of threshold bands that indicate different levels of frequency of occurrence.

7. The method of any one of the preceding claims, wherein indicating word groups that have a frequency of occurrence that is below a threshold value comprises displaying the word groups highlighted on a display.

8. The method of claim 7, comprising differentiating between word groups having a frequency of occurrence that falls within different threshold levels.

9. The method of any one of the preceding claims, wherein the word groups comprise word pairs.

10. A computer program which, when executed by a processor, is arranged to perform a method according to any one of the preceding claims.

11. A text processing apparatus, the apparatus comprising:
a parser for obtaining a plurality of word groups each comprising a sequence of words from a text;
a look-up module for determining a frequency of occurrence of each of the word groups within a text corpus; and
a display for indicating word groups that have a frequency of occurrence that is below a threshold value.

12. The apparatus of claim 11, comprising a database that stores word groups in association with the frequency of occurrence of each of the word groups in the text corpus, wherein the look-up module is arranged to look-up the database to determine the frequency of occurrence.

13. The apparatus of claim 12, wherein the frequency of occurrence for each of the word groups comprises one selected from the group of absolute frequency of occurrence, relative frequency of occurrence relative to the expected frequency of occurrence of the word group and a value obtained by comparing the absolute or relative frequency of occurrence with a threshold level.

14. A method of generating a database, comprising:
calculating permutations of a set of commonly used words in a given language;
for each permutation, determining the frequency of occurrence in a text corpus; and
storing the permutation in association with the determined frequency.

15. The method of claim 14, further comprising, for each permutation, calculating the expected frequency of occurrence based on the frequencies of occurrence of the individual words in the text corpus and/or further comprising calculating a ratio of the actual frequency of occurrence within the text corpus to the expected frequency of occurrence.
